# EUROPÄISCHE PATENTANMELDUNG

(11) **EP 2 322 452 A1**
(43) Veröffentlichungstag der Anmeldung: **18.05.2011**
(21) Anmeldenummer: 10014684.4
(22) Anmeldetag: 17.11.2010
(51) Int. Cl.: B65D 90/34, B65D 90/32, F16K 15/03, F16K 17/36, F16K 47/02

(54) **Explosionsschutzklappe**

(30) Priorität: 17.11.2009 DE 102009053359
(71) Anmelder: Reitinger, Peter, 64807 Dieburg (DE)
(72) Erfinder: Reitinger, Peter, 64807 Dieburg (DE)
(74) Vertreter: Behrens, Helmut

(57) **Zusammenfassung**

Die Erfindung betrifft eine Explosionsschutzklappe zum Ausgleich von Druckunterschieden in geschlossenen Anlagen, insbesondere in Behältern, Silos, Rohrleitungen und dergleichen, bei denen aufgrund der Anlageninhalte Explosionsgefahr besteht, mit einem um mindestens eine Schwenklageranordnung (4) verschwenkbaren Klappendeckel (2), der durch mindestens eine Zuhaltevorrichtung (3) im überdruckfreien Betriebszustand einen Auslassstutzen (1) geschlossen hält und mindestens noch eine Dämpfungsvorrichtung (5) aufweist, wobei die Dämpfungsvorrichtung (5) in einem vorgegebenen radialen Abstand von einem Schwenklager (37) der Schwenklageranordnung (4) zwischen dem Klappendeckel (2) und einem ortsfesten Bauteil (6) unterhalb des Klappendeckels (2) angeordnet ist und mindestens ein Dämpfungselement (22) enthält, das so ausgebildet ist, dass es erst nach einem vorbestimmbaren dämpfungsfreien Öffnungswinkelbereich wirksam wird, dadurch gekennzeichnet, dass die Dämpfungsvorrichtung (5) radial zwischen der Schwenklageranordnung (4) und einem radialen Überhang (8) des Klappendeckels (2) über die Schwenklagervorrichtung (4) hinaus in deren Schwenkbereich angeordnet ist und dass das Dämpfungselement (22) aus einem Elastomer-Werkstoff besteht.

## Beschreibung

Die Erfindung betrifft eine Explosionsschutzklappe zum Ausgleich von Druckunterschieden in geschlossenen Anlagen nach dem Oberbegriff des Patentanspruchs 1.

In allen geschlossen Anlagen, die mit staub- oder gasexplosionsgefährdeten Schüttgütern betrieben werden, wie Rohrleitungen, Silos, Behälter und dergleichen müssen Vorrichtungen zur Druckentlastung vorgesehen sein. Dazu sind Berstscheiben bekannt, die an explosionsgefährdeten Behältern, insbesondere Silos, angebracht werden und bei einem Überdruck von 60 bis 80 mbar zum Ausgleich von Druckstößen bei möglichen Staub- oder Gasexplosionen zerbrechen. Diese Berstscheiben haben den Vorteil, dass sie bei Überdrücken durch die sofortige Freigabe einer Ausgleichsöffnung eine so genannte Entlastungsfähigkeit von nahezu 100 % aufweisen. Allerdings werden bei einem Überdruckausgleich die Berstscheiben auch zerstört, so dass deren Erneuerung einen erheblichen Aufwand bedeutet und eine relativ lange Betriebsunterbrechung erfordert.

Eine Explosionsschutzklappe für Behälter zum Ausgleich von Druckstößen bei Staub- oder Gasexplosionen ist aus der DE 36 26 946 A1 bekannt. Diese Explosionsschutzklappe besteht im Wesentlichen aus einem Auslassstutzen, der an geeigneter Stelle an einem explosionsgefährdeten Behälter oder Silo angebracht ist. Dieser Auslassstutzen wird von einem ebenen Klappendeckel in Leichtbauweise geschlossen, der von einem federbelasteten Verschlusselement in seiner Schließstellung im überdruckfreien Betriebszustand fixiert wird. Dabei ist der Klappendeckel durch eine Schwenkachse am Auslassstutzen gelagert. Im Explosionsfalle löst sich bei einem vorgegebenen Überdruck das federbelastete Verschlusselement und der Klappendeckel öffnet sich durch ein plötzliches Verschwenken um die Schwenkachse. Da der Klappendeckel in Leichtbauweise gefertigt ist, besitzt er zwar eine verhältnismäßig geringe Entlastungsfähigkeit von etwa 50 bis 80 %, kann aber durch den Explosionsdruck auch leicht beschädigt werden. Deshalb sind zur Dämpfung der Öffnungsgeschwindigkeit zusätzlich noch ein federnd abgestützter Auffangteller und mindestens noch eine Pufferplatte in einem Winkelabstand über dem Klappendeckel am Schwenklager drehbar befestigt. Beim explosionsartigen Öffnen des Klappendeckels entstehen so Luftpolster zwischen dem Klappendeckel und dem Pufferplatten und dem Auffangteller, durch die die Öffnungsgeschwindigkeit stark abgebremst werden soll. Da zur Dämpfung zusätzlich noch eine progressive Blattfeder oberhalb des Klappendeckels vorgesehen ist, gegen die sich der Auffangteller abstützt, ist ein verhältnismäßig großer konstruktiver Aufwand für die Dämpfung des Klappendeckels notwendig.

Aus der EP 1 873 085 A1 ist eine Explosionsschutzklappe zum Ausgleich von Druckunterschieden in geschlossenen explosionsgefährdeten Anlagen bekannt. Diese Explosionsschutzklappe enthält einen um eine Schwenklageranordnung verschwenkbaren Klappendeckel, der durch eine federbelastete Zuhaltevorrichtung im überdruckfreien Betriebszustand einen Auslassstutzen geschlossen hält. Zusätzlich weist die Explosionsschutzklappe noch eine Dämpfungsvorrichtung auf, die die Öffnungsgeschwindigkeit des Klappendeckels bei einem explosionsbedingten Überdruck abbremst. Diese Dämpfungsvorrichtung ist in einem radialen Abstand vom Schwenklager zwischen dem Klappendeckel und einem ortsfesten Montagerand unterhalb des Klappendeckels angeordnet, wobei das Dämpfungselement erst nach einem vorgegebenen dämpfungsfreien Öffnungswinkelbereich wirksam wird. Dabei besteht die Dämpfungsvorrichtung aus einer Gleitlageranordnung, aus einem tangential zum Öffnungswinkel ausgerichteten Gleitbolzen und einem diesen koaxial umgreifenden koaxialen Gleitring sowie einem Anschlagwinkel. Dabei ist das Dämpfungselement als Zugfeder ausgebildet, die einerseits am Gleitring und andererseits am Klappendeckel befestigt ist. Eine derartige Dämpfungsvorrichtung hat den Nachteil, dass sie aus vielen Einzelteilen besteht und die zur Sicherstellung ihres Funktionsablaufs regelmäßig gewartet werden müssen.

Der Erfindung liegt deshalb die Aufgabe zugrunde, eine Vorrichtung zum Ausgleich von Druckstößen in geschlossenen Anlagen, wie Rohrleitungen, Silos oder Behältern derart zu verbessern, dass im Explosionsfall ein schneller Druckausgleich erfolgt, ohne dass Funktionsteile zerstört werden und die Vorrichtung schnell wieder funktionsbereit ist und dies bei einer möglichst kompakten einfachen Bauweise.

Diese Aufgabe wird durch die im Patentanspruch 1 angegebene Erfindung gelöst. Weiterbildungen und vorteilhafte Ausführungsbeispiele sind in Unteransprüchen angegeben.

Die Erfindung hat den Vorteil, dass durch den Überhang des Klappendeckels ein stabiler Hebelarm zur Verfügung steht, der die hohen Beschleunigungskräfte des Klappendeckels beim Abbremsen sicher aufnehmen kann. Dabei kann dieser Überhang im Verhältnis zur Klappenlänge relativ kurz gehalten werden, was den Vorteil hat, dass die Explosionsschutzklappe kompakt und insbesondere niedrigbauend ausführbar ist.

Die Erfindung hat weiterhin den Vorteil, dass durch die Dämpfungsvorrichtung unterhalb des Klappenüberhangs die Explosionsschutzklappe lediglich etwas längerbauend ist als die Länge oder der Durchmesser des Auslassstutzens und somit ebenfalls sehr kompakt bauend ausführbar ist. Dabei hat die Ausbildung des Dämpfungselements aus einem Elastomer den Vorteil, dass dies durch seine Materialeigenschaften einen Großteil der Beschleunigungsenergie des Klappendeckels auf einfache Weise zerstörungsfrei kompensiert und durch deren Elastizität und Restenergiemenge gleichzeitig den Klappendeckel selbsttätig wieder schließen kann. Dabei hat die Verwendung des Elasthomers den Vorteil, dass dieser langlebig und durch die Anordnung unter dem Klappenüberhang auch im Außenbereich einsetzbar ist und keinerlei Wartungsaufwand erfordert. Insbesondere hat der verhältnismäßig kleine Klappenüberhang den Vorteil, dass dadurch die Umfangsgeschwindigkeit des Klappenüberhangs klein gehalten werden kann, um das elastomere Dämpfungselement nicht zu zerstören.

Eine besondere Ausführung der Erfindung mit einem hohlen, nach vorne leicht spitz zulaufenden Klappendeckel hat den Vorteil, dass dieser leicht und äußerst stabil ausführbar ist, wodurch im Explosionsfall die Beschleunigungsenergie verhältnismäßig gering ist und der Klappenüberhang durch seine höhere statisch belastbarere Ausführung größere Dämpfungskräfte oder Bremskräfte aufnehmen kann.

Eine weitere Ausführung mit einer abgeschrägten Dämpfungsplatte und einem schrägen Abstützbock hat den Vorteil, dass der kreisförmig um das Schwenklager beschleunigte Klappendeckel nach dem dämpfungsfreien Öffnungsbereich stets rechtwinklig mit einer planen Auflagefläche in das axiale Dämpfungselement zentral einleitbar ist. Dadurch wird die Beschleunigungskraft des Klappendeckels ohne radiale Krafteinleitungskomponenten axial in das Dämpfungselement eingeleitet. Dabei hat die Verwendung einer abgeschrägten Dämpferplatte den Vorteil, dass durch dessen Plattendicke und Abschrägwinkel unterschiedliche dämpfungsfreie Öffnungswinkel des Klappendeckels einstellbar sind, um stets der geforderten Entlastungswirkung zu genügen. Die Erfindung wird anhand eines Ausführungsbeispiels, das in der Zeichnung dargestellt ist, näher erläutert. Es zeigen:
- Fig. 1:: eine Seitendarstellung einer Explosionsschutzklappe mit einer Lager- und Dämpfungsvorrichtung;
- Fig. 2:: eine vergrößerte Darstellung eines Ausschnittes der Lager- und Dämpfungsvorrichtung, und
- Fig. 3:: eine vergrößerte Schnittdarstellung eines Ausschnitts der Lagervorrichtung.

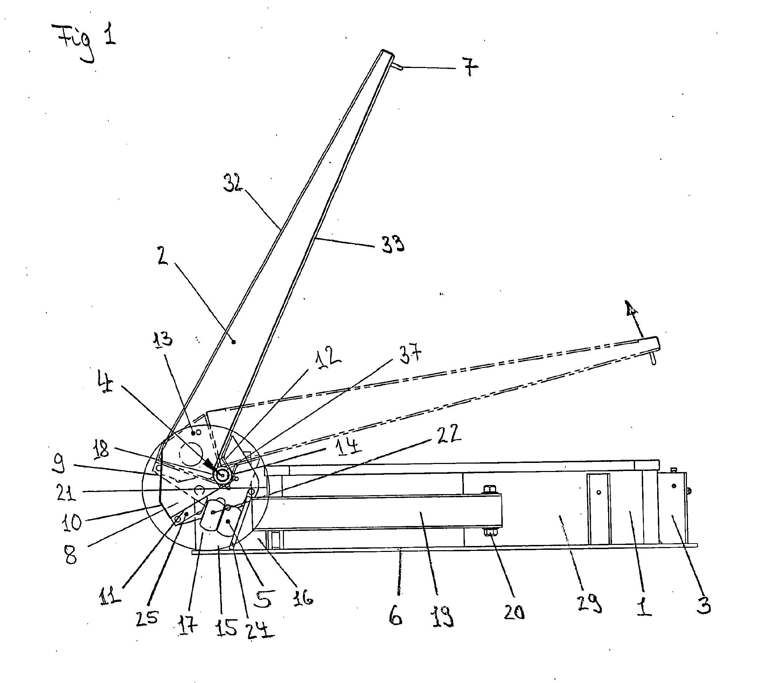

Die in Fig. 1 der Zeichnung dargestellte Explosionsschutzklappe besteht im Wesentlichen aus einem einen rechteckigen Auslassstutzen 1 verschließenden rechteckigen Klappendeckel 2, der von einer Zuhaltevorrichtung 3 in seiner Schließposition im überdruckfreien Betriebszustand gehalten wird und um eine Schwenklageranordnung 4, die in Öffnungsrichtung verschwenkbar ist. Dabei ist an der Schwenklageranordnung 4 noch eine Dämpfungsvorrichtung 5 vorgesehen, die die Öffnungsgeschwindigkeit des Klappendeckels 2 ab einem bestimmten Öffnungswinkel abbremst.

Eine derartige Explosionsschutzklappe wird vorzugsweise auf der oberen Abdeckfläche von Silos oder anderen Behältern montiert, in denen staubförmige Schüttgüter bewegt werden, die leicht zu Explosionen neigen. Im Explosionsfall soll diese Explosionsschutzklappe sehr schnell öffnen, um einen raschen Druckausgleich zu ermöglichen, aber danach ohne großen Montageaufwand wieder verschließbar sein, damit nicht lange Schüttgut austreten kann und der Schüttguttransport in der Anlage nur kurzfristig unterbrochen ist. Dazu wird meist am höchsten Punkt derartiger explosionsgefährdeter geschlossener Anlagen eine Öffnung nach außen vorgesehen, auf die die Explosionsschutzklappe befestigt wird. Dabei entspricht die Öffnung dem Auslassstutzenquerschnitt, über dem der Druckausgleich zur Atmosphäre erfolgt.

Derartige Auslassstutzen 1 sind meist rund, quadratisch oder rechteckig ausgebildet und besitzen bei einer eckigen oder runden Ausführung vorzugsweise einen Querschnitt von 0,2 bis 1,8 m². Der dargestellte Auslassstutzen 1 besitzt dabei einen rechteckigen Rohrstutzen, der anlagenseitig einen Montagerand 6 aufweist, in dem meist Löcher zum dichten Anschrauben auf dem Silo und zur Befestigung der Lager- 4 und Dämpfungsvorrichtung 5 angeordnet sind. Auf dem gegenüberliegenden Rohrstutzenende wird zum dichten Verschließen im überdruckfreien Betriebszustand vorzugsweise ein rechteckiger Klappendeckel 2 fixiert.

Der Klappendeckel 2 besteht aus einer hohlen Stahlblechkonstruktion, die nach vorne zu einer Zuhaltvorrichtung 3 leicht spitz zuläuft und in sich umschlossen ist. Dadurch ist der Klappendeckel 2 relativ leicht und trotzdem stabil, obwohl er bei einer Explosion mit einem Moment von ca. 3.000 bis 20.000 Nm belastet wird. An seiner abgeflachten Spitze enthält der Klappendeckel 2 einen Verschlussbügel 7, der in eine Aussparung der Zuhaltevorrichtung 3 eingreift und dort gegen eine Federkraft im geschlossenen Zustand bis zu einem Überdruck von 30 bis 100 mbar fixiert wird.

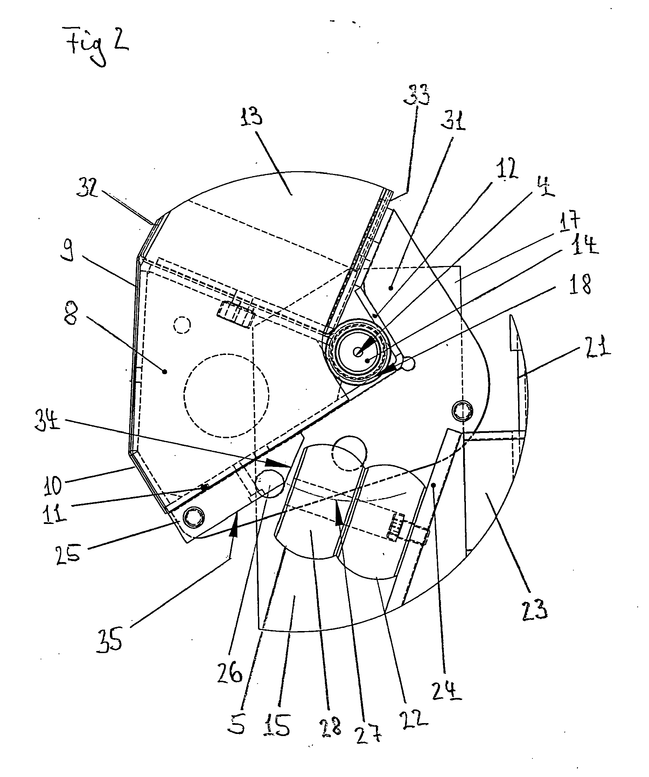

Radial gegenüberliegend zum Verschlussbügel 7 enthält der Klappendeckel 2 einen radialen Überhang 8 als Klappenüberhang, der im geschlossenen Zustand über den Auslassstutzen 1 und der Schwenklageranordnung 4 ca. 100 bis 300 mm bei einer Klappenlänge von ca. 500 bis 1.500 mm hinausragt und in Fig. 2 der Zeichnung ausschnittsweise vergrößert mit der Schwenklageranordnung 4 und der Dämpfungsvorrichtung 5 näher dargestellt ist. Der Klappenüberhang 8 besteht ausgehend von der Klappenoberseite 32 vorzugsweise aus zwei nach unten abknickend angeordneten Querblechteilen 9, 10, wobei das erste Querblechteil 9 vorzugsweise einen Abknickwinkel von 20° von der Klappenoberseite 32 und das zweite Querblechteil 10 einen Abknickwinkel gegenüber dem ersten Querblechteil 9 von ca. 35° aufweist. Rechtwinklig zum zweiten Querblechteil 10 ist dann ein drittes Querblechteil 11 angeordnet, das mit einer Dämpfungsfläche 35 zum Abstützen des Klappenüberhangs 8 auf einem Widerlager der Dämpfungsvorrichtung 5 dient. An diesem dritten Querblechteil 11 ist dann rechtwinklig ein viertes Querblechteil 12 angeordnet, das gleichzeitig mit der Unterseite 33 des Klappendeckels 2 verbunden ist. Zur Erhaltung einer hohen Festigkeit sind alle Querblechteile 9, 10, 11 und 12 vorzugsweise untereinander verschweißt, wobei auch die Längsseiten mit zwei strukturierten Längsblechen 13 verschweißt sind und so den innen hohlen Klappendeckel 2 bilden. Der Überhang 8 des Klappendeckels 2 kann aber auch durch anders winklige oder abgerundete Querbleche ausgeführt werden.

Bei einer besonderen Ausführung ist der Klappenüberhang 8 als separates hohes Bauteil ausgebildet, das durch eine Schraubverbindung an dem vorderen Deckblatt befestigt ist.

Durch die abknickend angeordneten Querbleche 9, 10 bildet das dritte abstützende Querblech 11 mit der Klappenunterseite vorzugsweise einen Winkel von 145°. Zur Lagerung des Klappendeckels 2 ist innen zwischen dem rechtwinkligen Verbindungsbereich zwischen dem vierten 12 und dritten Querblech 11 jeweils eine nach außen gerichtete runde durchgehende Lagerachse 14 vorgesehen, die zur schwenkenden Lagerung des Klappendeckels 2 dient.

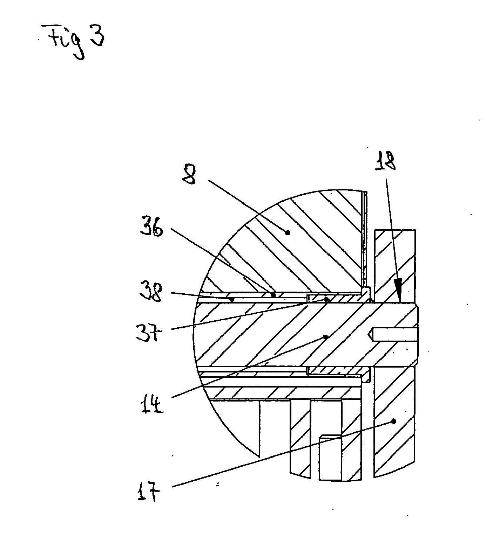

Die Lagerachse 14 ist Teil einer Schwenklageranordnung 4, die jeweils an den beiden Längsseiten 29 des Auslassstutzens 1 angeordnet ist und in Fig. 3 der Zeichnung als Ausschnitt näher dargestellt ist. Die Schwenklageranordnung 4 enthält zur Aufnahme der Lagerachse 14 noch eine L-förmige Lagerstütze 15, die mit einem Fußteil 16 auf dem Montagerand 6 des Auslassstutzens 1 aufsteht. Dabei ist in dem senkrecht nach oben gerichtete Längsteil 17 etwa in Höhe der Auslassstutzenöffnung eine Bohrung 18 vorgesehen, in der die Lagerachse 14 starr befestigt ist. Im Klappenüberhang 8 ist axial zur Bohrung 18 ein Lagerrohr 6 eingeschweißt, durch das die Lagerachse 14 zur gegenüberliegenden Lageranordnung 4 geführt ist. In dieses Lagerrohr 36 ist an jeder Seite des Klappenüberhangs 8 jeweils eine Gleitlagerbuchse 37 als Schwenklager eingesetzt, um das der Klappendeckel 2 mit seinem Klappenüberhang 8 verschwenkbar ist. In dem Luftspalt zwischen der Lagerachse 14 und dem Lagerrohr 36 ist ein Lagerfett eingefüllt, das eine Fettkammer 38 darstellt und das Schwenklager 37 dauerhaft schmiert. Diese Fettkammer 38 wirkt gleichzeitig wie ein Hydraulikzylinder, der das Schwenklager 37 vor Korrosion und Materialspannungen schützt und so eine witterungsabhängige dauerhafte Funktion gewährleistet.

Im Innenwinkelbereich der Lagerstütze 15 zwischen dem Fußteil 16 und dem Längsteil 17 ist ein langgestreckter Stützbalken 19 eingeschweißt, der etwa in der Mitte der Längsseite 29 des Auslassstutzens 1 mit diesem über ein Schwenkgelenk 20 schwenkbar verbunden ist, das zur einfachen Montage des Klappendeckels 2 an der Lageranordnung 4 dient.

Zum Abbremsen der Explosionsschutzklappe ist an der hinteren Querseite 21 des rohrförmigen Auslassstutzens 1 radial gegenüberliegend zur Zuhaltevorrichtung 3 unterhalb des Klappenüberhangs 8 die Dämpfungsvorrichtung 5 angeordnet. Da im Explosionsfall der Klappendeckel 2 mit einer Energie von ca. 3.000 Nm bis 20.000 Nm nach oben beschleunigt wird, müssen erhebliche Kräfte zum Abbremsen des Klappendeckels 2 aufgenommen werden. Dazu sind im Schwenkbereich des Klappenüberhangs 8 etwa unterhalb des Schwenklagers 37 als Teil der Dämpfungsvorrichtung 5 vorzugsweise zwei Dämpfungselemente 22 an der Querseite 21 beabstandet nebeneinander angeordnet. Dabei bestehen die Dämpfungselemente 22 aus einem Elastomer, vorzugsweise aus einem Kunststoff-Elastomer, insbesondere einem Co-Polyesther-Elastomer, durch das etwa 60 % der kinetischen Energie der Deckelbeschleunigung in Wärme und eine plastische Verformung umgewandelt werden. Dabei ist insbesondere durch den kurzen Plattenüberhang 8 sichergestellt, dass die Winkelbeschleunigung eine bestimmte Geschwindigkeit nicht überschreitet, bei der das Elastomer beschädigt oder zerstört wird. Als Elastomer kann auch eine Gummimischung eingesetzt werden.

Durch das Elastomer wird gewährleistet, dass der Klappendeckel 2 während der Explosionsdauer in einem vorgesehen Zeitfenster geöffnet bleibt und mit der Restenergie sich wieder selbsttätig schließen kann. Das Dämpfungselement 22 kann auch so ausgebildet sein, dass die Klappe 2 wegen der Unterdruckwirkung geöffnet bleibt. Die beiden nebeneinander angeordneten Dämpfungselemente 22 sind dabei auf einem Abstützbock 23 schräg nach hinten gerichtet befestigt. Jeder Abstützbock 23 besteht aus 5 senkrecht aufeinander stehenden Stahlblechplatten, die etwa einen offenen schrägen Quader bilden, der zwischen der hinteren Querseitenwand 21 des Auslassstutzens 2 und dem hinteren Montagerand 6 befestigt ist. Dabei ist die radial nach hinten gerichtete Befestigungsplatte 24 des Abstützbocks 23, die den schrägen Quader verschließt, schräg zur hinteren Querseitenwand 21 und auch schräg zum hinteren Monatagerand 6 ausgerichtet, vorzugsweise in einem Winkel von 20° geneigt zur Querseitenwand 21.

Senkrecht auf dieser Befestigungsplatte 24 ist jeweils das Dämpfungselement 22 angeordnet, das vorzugsweise zylinderförmig oder ballenförmig ausgebildet ist. Die ballenförmige Ausbildung besteht vorzugsweise aus zwei abgeflachten Kugelballen 28, die miteinander fest verbunden sind und zur Befestigung eine zentrale Bohrung 27 aufweisen. Zur Befestigung am Abstützbock 23 ist in der Bohrung 27 eine Schraube vorgesehen, durch die das Dämpfungselement 22 an der Befestigungsplatte 24 festgeschraubt ist. Das Dämpfungselement 22 hat dabei vorzugsweise einen Durchmesser von ca. 50 bis 100 mm und eine Länge von 80 bis 160 mm, um die Energie gut absorbieren zu können. Es muss dabei zwischen den beiden Schwenklageranordnungen 4 mindestens ein Dämpfungselement 22 oder bei größeren Beschleunigungsenergien können auch mehrere Dämpfungselemente 22 im Schwenkbereich des Deckelüberhangs 8 vorgesehen werden.

Im Schwenkbereich des Deckelüberhangs 8 radial gegenüberliegend zum Dämpfungselement 22 ist am dritten Querblech 11 jeweils eine Dämpfungsplatte 25 zur axialen Krafteinleitung in das Dämpfungselement 22 befestigt. Die Dämpfungsplatte 25 besteht vorzugsweise aus einem quaderförmigen Stahlblech, dessen gegenüberliegende Oberfläche zum Dämpfungselement 22 als Dämpfungsfläche 35 vorzugsweise in einem Winkel von ca. 35° gegenüber seiner äußeren Längsseite als Abstützfläche 34 abgeschrägt ist. Dabei sind alle Winkel der Dämpfungsplatte 25, der Querbleche 9 bis 12 und der Befestigungsplatte 24 so aufeinander abgestimmt, dass die Beschleunigungskraft über den Klappenüberhang 8 auf der kreisförmigen Schwenkbahn senkrecht in das Dämpfungselement 22 eingeleitet wird, um eine seitliches Kippen des Dämpfungselements 22 sicher zu vermeiden. Zur Zentrierung ist deshalb in der Dämpfungsplatte 25 noch eine Kugel 26 eingelassen, die beim Schwenken in die Bohrung 27 des Dämpfungselements 22 eingreift. In einer alternativen Ausführung kann die Funktion und Ausbildung der Dämpfungsplatte 25 auch in dem dritten Querblech 11 integriert ausgebildet sein.

Insgesamt ist die Dämpfungsvorrichtung 5 so bemessen, dass im Explosionsfall der Klappendeckel 2 bis zu einem Öffnungswinkel von ca. 45 bis 90° ohne Dämpfung beschleunigt wird, um den Explosionsdruck schnell abzubauen. Bei der vorstehenden Ausführung ist vorzugsweise ein ungedämpftes Öffnen des Klappendeckels 2 von ca. 70° vorgesehen, ehe die Dämpfungsplatte 25 mit dem Dämpfungselement 22 in Kontakt tritt. Danach wird das Dämpfungselement 22 durch den Klappenüberhang 8 gestaucht und dadurch etwa in einem Schwenkbereich von ca. 15 bis 30° plastisch und elastisch verformt, wodurch die kinetische Beschleunigungsenergie zumindestens zu 40 bis 70% in Wärme und plastische Verformung umgewandelt wird. Dadurch tritt eine schnell abbremsende Dämpfung ein, durch die die Explosionsschutzklappe nicht beschädigt wird und wobei durch die Elastizität des Dämpfungselements 22 der Klappendeckel 2 dann wieder sicher schließt oder geöffnet bleibt. Eine zusätzliche Dämpfung wird auch durch die Fettkammer 38 erzeugt, die gleichzeitig die Lagerbelastung verringert.

In der Praxis hat sich dabei gezeigt, dass das elastomere Dämpfungselement 22 auch bei größerer Beschleunigungsenergie in seiner Funktion nicht beeinträchtigt wird und durch seine Elastizität stets wieder in seine Ursprungsform zurückkehrt. Um die Stabilität des Klappendeckels 2 zusätzliche zu erhöhen, sind zur Verstärkung des Klappenüberhangs 8 vorzugsweise noch mindestens zwei oder vier Winkelelemente 31 vorgesehen, die das stark belastete dritte Querblech 11 gegenüber der Klappenunterseite 35 abstützen.

## Patentansprüche

1. Explosionsschutzklappe zum Ausgleich von Druckunterschieden in geschlossenen Anlagen, insbesondere in Behältern, Silos, Rohrleitungen und dergleichen, bei denen aufgrund der Anlageninhalte Explosionsgefahr besteht, mit einem um mindestens eine Schwenklageranordnung (4) verschwenkbaren Klappendeckel (2), der durch mindestens eine Zuhaltevorrichtung (3) im überdruckfreien Betriebszustand einen Auslassstutzen (1) geschlossen hält und mindestens noch eine Dämpfungsvorrichtung (5) aufweist, wobei die Dämpfungsvorrichtung (5) in einem vorgegebenen radialen Abstand von einem Schwenklager (37) der Schwenklageranordnung (4) zwischen dem Klappendeckel (2) und einem ortsfesten Bauteil (6) unterhalb des Klappendeckels (2) angeordnet ist und mindestens ein Dämpfungselement (22) enthält, das so ausgebildet ist, dass es erst nach einem vorbestimmbaren dämpfungsfreien Öffnungswinkelbereich wirksam wird, **dadurch gekennzeichnet, dass** die Dämpfungsvorrichtung (5) radial zwischen der Schwenklageranordnung (4) und einem radialen Überhang (8) des Klappendeckels (2) über die Schwenklagervorrichtung (4) hinaus in deren Schwenkbereich angeordnet ist und dass das Dämpfungselement (22) aus einem Elastomer-Werkstoff besteht.

2. Explosionsschutzklappe nach Anspruch 1, **dadurch gekennzeichnet, dass** die Dämpfungsvorrichtung (4) mindestens eine schräg zur Klappenunterseite (33) des Klappendeckels (2) angeordnete Dämpfungsplatte (25) und mindestes ein in deren Schwenkbereich vorgesehenes axiales Dämpfungselement (22) enthält, wobei das Dämpfungselement (22) im Schwenkbereich auf einer schrägen Befestigungsplatte (24) ortfest angeordnet ist.

3. Explosionsschutzklappe nach einem der Ansprüche 1 oder 2, **dadurch gekennzeichnet, dass** das Dämpfungselement (22) zylinder- oder ballenförmig ausgebildet ist und aus einem Kunststoff-Elastomer, insbesondere einem Co-Polyesther-Elastomer oder einer elastomeren Gummimischung besteht.

4. Explosionsschutzklappe nach einem der vorhergehenden Ansprüche, **dadurch gekennzeichnet, dass** der Auslassstutzen (1) und der Klappendeckel (2) quadratisch oder rechteckig ausgebildet sind, wobei der Klappendeckel (2) aus zu einer Zuhaltvorrichtung (3) leicht spitz zulaufenden Blechform besteht, die innen hohl ist.

5. Explosionsschutzklappe nach einem der vorhergehenden Ansprüche, **dadurch gekennzeichnet, dass** der Klappenüberhang (8) fest oder geschraubt mit dem Klappendeckel (2) verbunden ist und im Verhältnis zur Länge des schließenden Kalppenteils höchstens ein Fünftel bis ein Drittel beträgt.

6. Explosionsschutzklappe nach einem der vorhergehenden Ansprüche, **dadurch gekennzeichnet, dass** der Klappenüberhang (8) mit seiner zum Dämpfungselement (22) gerichteten Dämpfungsfläche (35) einen Winkel zur Klappenunterseite (33) von ca. 130° bis 160° aufweist.

7. Explosionsschutzklappe nach einem der vorhergehenden Ansprüche, **dadurch gekennzeichnet, dass** im Schwenkbereich des Klappenübergangs (8) auf der Dämpfungsfläche (35) gegenüber dem Dämpfungselement (22) eine Dämpfungsplatte (25) mit einer abgeschrägten Abstützfläche (34) angeordnet ist.

8. Explosionsschutzklappe nach einem der vorhergehenden Ansprüche, **dadurch gekennzeichnet, dass** das axiale Dämpfungselement (22) auf einer schräg zur hinteren Querseite (21) der Rohrwand des Auslassstutzens (1) angeordneten Befestigungsplatte (24) befestigt ist.

9. Explosionsschutzklappe nach einem der vorhergehenden Ansprüche, **dadurch gekennzeichnet, dass** die Befestigungsplatte (24) auf einem Abstützbock (23) angeordnet ist, der sich auf den Montagerand (6) und einer hinteren Querseite (21) des rechteckigen oder quadratischen Auslassstutzens (1) abstützt.

10. Explosionsschutzklappe nach einem der vorhergehenden Ansprüche, **dadurch gekennzeichnet, dass** die Schenklageranordnung (4) eine durchgehende Lagerachse (14) enthält, die im Klappendeckel (2) oder im Klappenüberhang (8) verschwenkbar durch mindestens zwei Schwenklager (37) gelagert und in der Lagerstütze (15) befestigt ist, wobei die Schwenklager (37) eine Fettkammer (38) abdichtend verschließen.
